(19) Europäisches Patentamt
European Patent Office
Office européen des brevets

(11) **EP 1 933 015 A1**

(12) **EUROPEAN PATENT APPLICATION**
published in accordance with Art. 153(4) EPC

(43) Date of publication:
**18.06.2008 Bulletin 2008/25**

(51) Int Cl.:
*F01N 3/36* *(2006.01)*     *B01D 53/94* *(2006.01)*
*F01N 3/02* *(2006.01)*     *F01N 3/08* *(2006.01)*
*F01N 3/20* *(2006.01)*     *F02D 45/00* *(2006.01)*

(21) Application number: **06797326.3**

(22) Date of filing: **28.08.2006**

(86) International application number:
**PCT/JP2006/317388**

(87) International publication number:
**WO 2007/026901 (08.03.2007 Gazette 2007/10)**

(84) Designated Contracting States:
**DE FR**

(30) Priority: **02.09.2005 JP 2005255137**

(71) Applicant: **TOYOTA JIDOSHA KABUSHIKI KAISHA**
**Toyota-shi**
**Aichi 471-8571 (JP)**

(72) Inventor: **TAHARA, Jun**
**Toyota-shi, Aichi 4718571 (JP)**

(74) Representative: **Intes, Didier Gérard André et al**
**Cabinet Beau de Loménie**
**158, rue de l'Université**
**75340 Paris Cedex 07 (FR)**

(54) **EXHAUST GAS PURIFICATION DEVICE**

(57) An ECU corrects a fuel addition interval, based on an amount of change between a present backpressure and a basic backpressure obtained when a basic addition interval is set, to reduce the fuel addition interval with an increase in the amount of change in the backpressure (steps ST1-ST4). Thereby, a required fuel addition amount can be secured even if a pressure in an exhaust path provided with a fuel addition valve is increased and thus the backpressure at an ejection hole portion of the fuel addition valve is increased. Consequently, an increase in a catalyst bed temperature required for an exhaust gas purifying function of a catalyst can be ensured. Further, a temperature at a tip of the fuel addition valve can be maintained at not more than a predetermined value (i.e., a temperature at which production of deposits can be suppressed), and thus clogging of the ejection hole of the fuel addition valve with the deposits can be avoided.

FIG. 3

EP 1 933 015 A1

## Description

Technical Field

The present invention relates to a device purifying exhaust gas of an internal combustion engine with a catalyst, and more specifically, to an exhaust gas purification device having a fuel addition valve adding fuel to an exhaust path.

Background Art

Generally, in an internal combustion engine performing lean combustion such as a diesel engine, an operation region in which an air-fuel mixture with a high air-fuel ratio (in a lean atmosphere) is combusted accounts for a large percentage of an entire operation region. Therefore, an exhaust path of the engine of this type is provided with a nitrogen oxide (hereinafter referred to as NOx) occlusion agent (an NOx occlusion catalyst) for occluding (absorbing) NOx contained in exhaust gas to purify the exhaust gas.

When the amount of NOx occluded in such an NOx occlusion catalyst reaches saturation, it is necessary to reduce NOx and restore the NOx occlusion catalyst. To reduce NOx, NOx reduction treatment is performed by adding an NOx reducing agent (fuel such as light oil) to the upstream of the NOx occlusion catalyst provided in the exhaust path, thermally decomposing the fuel to generate hydrocarbon, and using the generated hydrocarbon as a reducing agent to accelerate reduction of NOx.

Further, the exhaust gas of a diesel engine contains particulates (hereinafter referred to as PM (Particulate Matter)), soot, an SOF (Soluble Organic Fraction), and the like mainly composed of carbon, which are the causes of air pollution. As a device to remove such PM and the like, there has been known an exhaust gas purification device having a particulate filter provided in an exhaust path of a diesel engine for trapping PM contained in exhaust gas passing through the exhaust path to reduce the amount of emission released to the atmosphere As a particulate filter, a DPF (Diesel Particulate Filter) or a DPNR (Diesel Particulate-NOx Reduction system) catalyst is used, for example

When PM is trapped with a particulate filter and the trapped PM is deposited thereon in large amount to clog the particulate filter, pressure loss in the exhaust gas passing through the particulate filter is increased and accordingly an engine exhaust backpressure is increased, causing a reduction in engine output and fuel efficiency To solve such a problem, PM regeneration treatment is performed by adding fuel to the exhaust path (upstream of the particulate filter) to increase an exhaust gas temperature and thereby accelerate oxidation (combustion) of the PM on the particulate filter

As described above, in the NOx reduction treatment and the PM regeneration treatment performed to suppress deterioration of an exhaust gas purifying function of a catalyst, the exhaust path is provided with a fuel addition valve to supply fuel (a reducing agent) into the exhaust path As a technique for optimizing an addition amount of the fuel to be added into the exhaust path, there has been proposed a technique determining the addition amount with reference to a map based on an atmospheric pressure and thus determining the fuel addition amount according to a change in the atmospheric pressure, to improve deteriorated fuel efficiency (see for example Japanese Patent Laying-Open No 8-270435)

When a pressure in the exhaust path provided with the fuel addition valve is increased due to an increase in an exhaust gas flow volume or an increase in an exhaust gas temperature, and thus a backpressure at an ejection hole portion of the fuel addition valve is increased, the actual fuel addition amount is decreased In such a situation, it is not possible to ensure an increase in a catalyst bed temperature required for the exhaust gas purifying function of the catalyst, due to a shortage in the fuel addition amount Further, a temperature at a tip portion of the fuel addition valve is increased, causing clogging of the ejection hole of the fuel addition valve with deposits produced by the increase in the temperature Herein, deposits are produced when substances such as soot and an SOF contained in the exhaust gas adhere to and are deposited on the ejection hole of the fuel addition valve, exposed to the exhaust gas with a high temperature, and thus altered and solidified

Since Japanese Patent Laying-Open No 8-270435 does not take into account the increase in the backpressure at the ejection hole portion of the fuel addition valve as described above, the shortage in the fuel addition amount due to the increase in the backpressure cannot be resolved even using the method described in Japanese Patent Laying-Open No 8-270435, that is, the method for optimizing the fuel addition amount to improve deteriorated fuel efficiency

Disclosure of the Invention

The present invention has been made in view of the above circumstances, and one object of the present invention is to provide an exhaust gas purification device capable of securing a fuel addition amount required for such as an exhaust gas purifying function of a catalyst despite an increase in a backpressure at an ejection hole portion of a fuel addition valve

The present invention provides an exhaust gas purification device having a catalyst provided in an exhaust path of an internal combustion engine and a fuel addition valve adding fuel to the exhaust path, characterized in that an addition amount of the fuel to be added to the exhaust path is corrected based on a pressure in the exhaust path provided with the fuel addition valve Specifically, the exhaust gas purification device is characterized in that an injection amount of the fuel to be injected to the exhaust path is corrected by multiplying a basic injection time interval or a basic injection time period by a correction coefficient according to the pressure in the exhaust path

According to the present invention, when the pressure in the exhaust path provided with the fuel addition valve is increased and thus a backpressure at an ejection hole portion of the fuel addition valve is increased, the fuel addition amount can be increased according to an amount of change in the backpressure, for example by correcting an fuel addition interval Consequently, an increase in a catalyst bed temperature required for the exhaust gas purifying function of the catalyst can be ensured Further, a temperature at a tip of the fuel addition valve can be maintained at not more than a predetermined value (i e , a temperature at which production of deposits can be suppressed), and thus clogging of the ejection hole of the fuel addition valve with the deposits can be avoided

In the present invention, the pressure in the exhaust path may be estimated from at least one of an intake air volume (exhaust gas flow volume) and an exhaust gas temperature, or may be obtained from an output of a pressure sensor provided adjacent to the fuel addition valve

In the present invention, the addition amount of the fuel to be added to the exhaust path may be corrected based on a timing when the fuel is injected into a cylinder of the internal combustion engine With such a structure, correction can be performed taking into account an effect caused when a feed pressure is instantaneously reduced due to in-cylinder injection in the internal combustion engine (i e , a reduction in the fuel addition amount), and the fuel can be added with higher accuracy

According to the present invention, a fuel addition amount required for an exhaust gas purifying function of a catalyst can be secured despite an increase in a backpressure at an ejection hole portion of a fuel addition valve due to an increase in an exhaust gas flow volume or an increase in an exhaust gas temperature Further, clogging of the fuel addition valve can be suppressed

Brief Description of the Drawings

Fig 1 is a schematic structural view showing an exemplary diesel engine to which the present invention is applied
Fig 2 is a block diagram showing a structure of a control system such as an ECU (Electronic Control Unit)
Fig 3 is a flowchart illustrating an exemplary addition interval correction process performed by the ECU
Fig 4 shows a basic addition interval calculation map used for the addition interval correction process of Fig 3
Fig 5 shows a water temperature correction coefficient map used for the addition interval correction process of Fig 3
Fig 6 shows a backpressure correction coefficient map used for the addition interval correction process of Fig 3
Fig 7 shows a fuel addition interval and a fuel addition time period

Best Modes for Carrying Out the Invention

In the following, embodiments of the present invention will be described with reference to the drawings

<Engine>

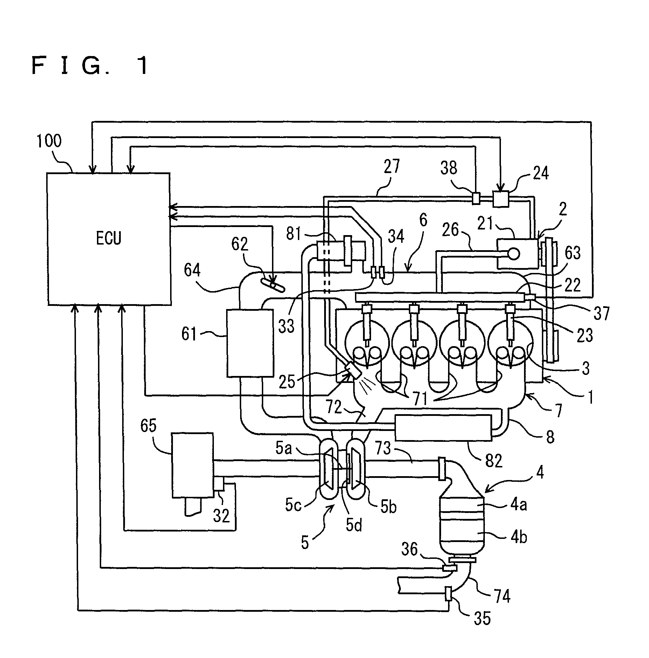

Referring to Fig 1, a schematic structure of a diesel engine to which a fuel addition device of the present invention is applied will be described

A diesel engine 1 (hereinafter referred to as an "engine 1") of this example is for example a common-rail type in-cylinder direct injection four-cylinder engine including main components such as a fuel supply system 2, a combustion chamber 3, an intake system 6, and an exhaust system 7

Fuel supply system 2 includes a supply pump 21, a common rail 22, an injector (fuel injection valve) 23, a cut-off valve 24, a fuel addition valve 25, an engine fuel path 26, an added fuel path 27, and the like

Supply pump 21 draws fuel from a fuel tank, increases the pressure of the drawn fuel to a high pressure, and then supplies the fuel to common rail 22 through engine fuel path 26 Common rail 22 has a function as an accumulation chamber maintaining (accumulating) the high pressure fuel supplied from supply pump 21 at a predetermined pressure, and distributes the accumulated fuel to each injector 23 Injector 23 is an electromagnetically driven open/close valve that opens when a predetermined voltage is applied and injects the fuel into combustion chamber 3 for supply

Supply pump 21 also supplies a portion of the fuel drawn from the fuel tank to fuel addition valve 25 through added fuel path 27 Fuel addition valve 25 is an electromagnetically driven open/close valve that opens when a predetermined voltage is applied and adds the fuel to exhaust system 7 (ranging from an exhaust port 71 to an exhaust manifold 72) Cut-off valve 24 cuts off added fuel path 27 to stop fuel supply in case of emergency

Intake system 6 includes an intake manifold 63 connected to an intake port formed in a cylinder head An intake pipe 64 constituting an intake path is connected to intake manifold 63 The intake path is provided with an air cleaner 65, an air flow meter 32, and a throttle valve 62 arranged in this order from upstream Air flow meter 32 outputs an electrical signal according to a volume of air flowing into the intake path through air cleaner 65

Exhaust system 7 includes exhaust manifold 72 connected to exhaust port 71 formed in the cylinder head Exhaust pipes 73 and 74 constituting an exhaust path are connected to exhaust manifold 72 The exhaust path is provided with a catalyst device 4

Catalyst device 4 includes an NOx occlusion-reduction catalyst 4a and a DPNR catalyst 4b NOx occlusion-reduction catalyst 4a occludes NOx when exhaust gas contains a large amount of oxygen, and reduces NOx to $NO_2$ or NO and releases $NO_2$ or NO when the exhaust gas has a low oxygen concentration and contains a large amount of a reduction component (for example, an unburned component (HC) of the fuel) NOx released as $NO_2$ or NO quickly reacts with HC and CO in the exhaust gas and is further reduced to $N_2$ HC and CO themselves are oxidized by reducing $NO_2$ or NO, and becomes $H_2O$ and $CO_2$

DPNR catalyst 4b is formed for example by incorporating an NOx occlusion-reduction catalyst into a porous ceramic structure PM contained in the exhaust gas is trapped by DPNR catalyst 4b when passing through a porous wall When the exhaust gas has a lean air-fuel ratio, NOx in the exhaust gas is occluded in the NOx occlusion-reduction catalyst, and when the exhaust gas has a rich air-fuel ratio, the occluded NOx is reduced and released DPNR catalyst 4b also includes a catalyst oxidizing and combusting the trapped PM (for example, an oxidation catalyst mainly composed of a noble metal such as platinum)

Catalyst device 4, fuel addition valve 25, added fuel path 27, and cut-off valve 24 described above, an ECU (Electronic Control Unit) 100 controlling opening/closing of fuel addition valve 25, and the like constitute an exhaust gas purification device

Engine 1 is provided with a turbo charger (supercharger) 5 Turbo charger 5 includes a turbine wheel 5b and a compressor wheel 5c coupled via a turbine shaft 5a Compressor wheel 5c is disposed to face the inside of intake pipe 64, and turbine wheel 5b is disposed to face the inside of exhaust pipe 73 Turbo charger 5 with such a structure supercharges intake air by rotating compressor wheel 5c with an exhaust gas flow (exhaust gas pressure) received by turbine wheel 5b Turbo charger 5 of this example is a variable nozzle turbo charger, and has a variable nozzle vane mechanism 5d provided on a side adjacent to turbine wheel 5b The supercharging pressure of engine 1 can be adjusted by adjusting an opening degree of variable nozzle vane mechanism 5d

Intake pipe 64 of intake system 6 is provided with an intercooler 61 for forcibly cooling the intake air warmed up by the supercharging at turbo charger 5 Throttle valve 62 is provided further downstream of intercooler 61 Throttle valve 62 is an electronically controlled open/close valve with a continuously adjustable opening degree, and has a function of narrowing the area of a flow path for the intake air under a predetermined condition and adjusting (reducing) a supply amount of the intake air

Engine 1 is further provided with an EGR path (exhaust gas recirculation path) 8 connecting intake system 6 with exhaust system 7 EGR path 8 returns a portion of the exhaust gas back to intake system 6 as appropriate and supplies it again to combustion chamber 3 to decrease a combustion temperature, thereby reducing an NOx generation amount EGR path 8 is provided with an EGR valve 81 and an EGR cooler 82 for cooling the exhaust gas passing (recirculating) through EGR path 8 An EGR volume (exhaust gas recirculation volume) to be introduced from exhaust system 7 to intake system 6 can be adjusted by adjusting an opening degree of EGR valve 81

<Sensors>

Various sensors are attached to individual parts of engine 1 to output signals according to circumstantial conditions of the individual parts and operation states of engine 1

For example, air flow meter 32 outputs a detection signal according to a flow volume of the intake air (intake air volume) upstream of throttle valve 62 in intake system 6 An intake air temperature sensor 33 is disposed at intake manifold 63 to output a detection signal according to an intake air temperature An intake air pressure sensor 34 is disposed at intake manifold 63 to output a detection signal according to an intake air pressure An A/F (air-fuel ratio) sensor 3 5 outputs a detection signal that varies continuously according to an oxygen concentration in the exhaust gas downstream of catalyst device 4 in exhaust system 7 An exhaust gas temperature sensor 36 outputs a detection signal according to a temperature of the exhaust gas (exhaust gas temperature) downstream of catalyst device 4 in exhaust system 7 A rail pressure sensor 37 outputs a detection signal according to a pressure of the fuel accumulated in common rail 22 A fuel pressure sensor 38 outputs a detection signal according to a pressure of the fuel (fuel pressure) passing through added fuel path 27

<ECU>

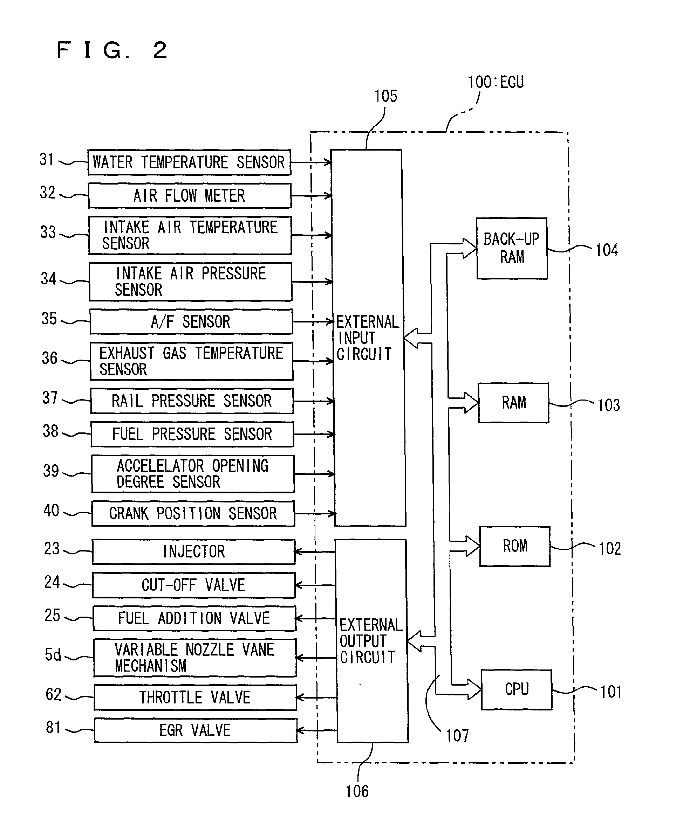

As shown in Fig 2, ECU 100 includes a central processing unit (CPU) 101, a read-only memory (ROM) 102, a random access memory (RAM) 103, a back-up RAM 104, and the like ROM 102 stores various control programs, maps that are referred to when such various control programs are executed, and the like CPU 101 performs various operations based on the various control programs and maps stored in ROM 102 RAM 103 is a memory temporarily storing results of the operations in CPU 101, data input from the individual sensors, and the like. Back-up RAM 104 is a nonvolatile memory storing, for example, data and the like to be retained when engine 1 is stopped.

ROM 102, CPU 101, RAM 103, and back-up RAM 104 described above are connected with one another via a bus 107, and also connected with an external input circuit 105 and an external output circuit 106.

Air flow meter 32, intake air temperature sensor 33, intake air pressure sensor 34, A/F sensor 35, exhaust gas temperature sensor 36, rail pressure sensor 37, and fuel pressure sensor 38 described above are connected to external input circuit 105. Further, a water temperature sensor 31 outputting a detection signal according to a temperature of cooling water for engine 1, an accelerator opening degree sensor 39 outputting a detection signal according to an amount of depression of an accelerator pedal, a crank position sensor 40 outputting a detection signal (pulse) each time when an output axis (crank shaft) of engine 1 is rotated at a predetermined angle, and the like are connected to external input circuit 105. On the other hand, injector 23, cut-off valve 24, fuel addition valve 25, variable nozzle vane mechanism 5d, throttle valve 62, EGR valve 81, and the like are connected to external output circuit 106.

According to outputs of the various sensors described above, ECU 100 performs various controls of engine 1. ECU 100 also performs PM regeneration control (including a fuel addition interval correction process) described below.

<PM Regeneration Control>

Firstly, ECU 100 estimates a PM deposition amount deposited in DPNR catalyst 4b. The PM deposition amount can be estimated, for example, by determining PM adhesion amounts according to respective operation states of engine 1 (for example, an exhaust gas temperature, a fuel injection amount, and an engine revolution number) through experiments and the like and mapping the determined PM adhesion amounts beforehand, and then summing the PM adhesion amounts obtained from the map to determine the PM deposition amount. The PM deposition amount can also be estimated according to a travel distance or time of a vehicle, or estimated by providing catalyst device 4 with a pressure difference sensor detecting a difference between a pressure upstream of DPNR catalyst 4b and a pressure downstream of DPNR catalyst 4b, and estimating the PM deposition amount trapped by DPNR catalyst 4b based on an output of the sensor

When the estimated PM amount reaches not less than a predetermined reference value (deposition amount limit), ECU 100 determines that DPNR catalyst 4b should now be regenerated, and performs PM regeneration control Specifically, ECU 100 calculates a required fuel addition amount with reference to a map prepared beforehand through experiments and the like based on the engine revolution number read from an output of crank position sensor 40, controls opening/closing of fuel addition valve 25 according to the calculation result, and intermittently repeats adding fuel to exhaust system 7 As a result of such fuel addition, a catalyst bed temperature of DPNR catalyst 4b is increased, and PM deposited in DPNR catalyst 4b is oxidized and released as $H_2O$ and $CO_2$ In the present invention, the required fuel addition amount is corrected according to an increase in a backpressure at an ejection hole portion of fuel addition valve 25 to secure a fuel addition amount required for such as an exhaust gas purifying function of the catalyst Details of the correction process (addition interval correction process) will be described later

In addition to the PM regeneration control described above, ECU 100 may perform S-poisoning recovery control and NOx reduction control S-poisoning recovery control is a control that intermittently repeats adding fuel from fuel addition valve 25 to increase a catalyst bed temperature and make the air-fuel ratio of the exhaust gas stoichiometric or rich, thereby releasing a sulfur component from NOx occlusion-reduction catalyst 4a and the NOx occlusion-reduction catalyst in DPNR catalyst 4b NOx reduction control is a control that reduces NOx occluded in NOx occlusion-reduction catalyst 4a and the NOx occlusion-reduction catalyst in DPNR catalyst 4b to $N_2$, $CO_2$, and $H_2O$ by intermittent fuel addition from fuel addition valve 25, and releases $N_2$, $CO_2$, and $H_2O$

The PM regeneration control, the S-poisoning recovery control, and the NOx reduction control are respectively performed when requested When these controls are simultaneously requested to be performed, they are preferentially performed in order of the PM regeneration control, the S-poisoning recovery control, and the NOx reduction control

<Addition Interval Correction Process>

Firstly, a backpressure correction coefficient used for the addition interval correction process performed in engine ECU 6 will be described

[Backpressure Correction Coefficient]

In this example, the fuel addition amount is corrected by multiplying a basic addition interval Tb by a backpressure correction coefficient, and the following equations are given

$$P1 \bullet V1/T1 = P2 \bullet V2/T2$$

$$P2 = P1 \bullet V1/T1 \bullet T2/V2,$$

where P1 is a basic backpressure, V1 is a basic exhaust gas flow volume (intake air volume), and T1 is a basic exhaust gas temperature when basic addition interval Tb is calculated, and P2 is a backpressure, V2 is an exhaust gas flow volume (intake air volume), and T2 is an exhaust gas temperature at present An amount of change $\Delta P$ between the present backpressure and the backpressure obtained when basic addition interval Tb is calculated (hereinafter referred to as a "backpressure change amount $\Delta P$") is represented by the following equation

$$\Delta P = P2 - P1 = P1(V1/T1 \bullet T2/V2 - 1) \ \dots \ (1)$$

It is to be noted that, since backpressure change amount $\Delta P$ is affected by an atmospheric pressure, it is preferable to correct backpressure change amount $\Delta P$ as appropriate according to a change in the atmospheric pressure

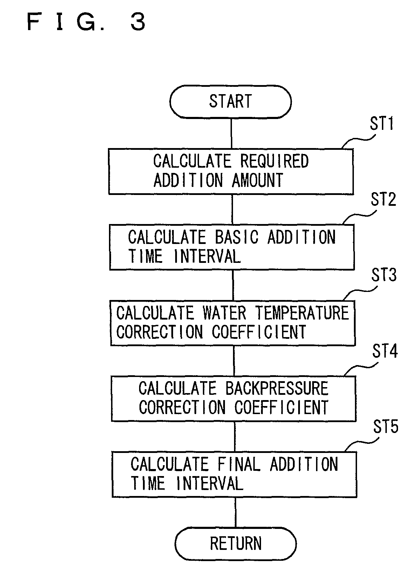

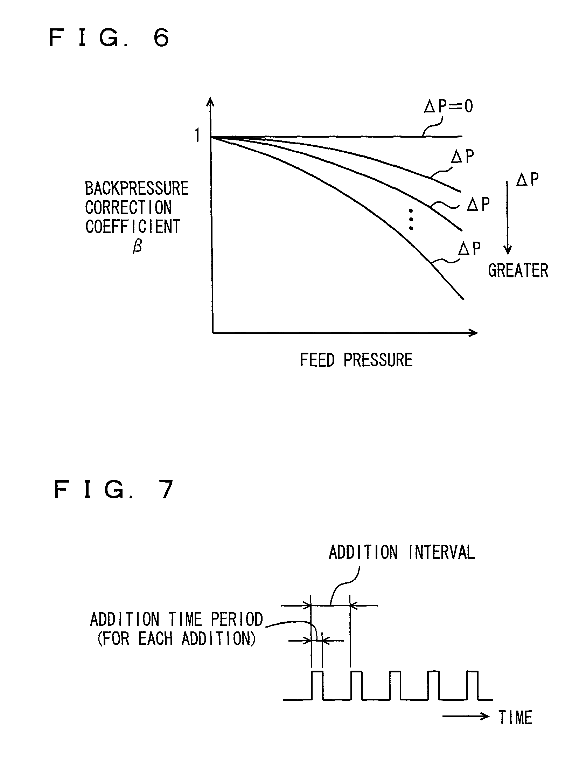

Subsequently, with reference to a map shown in Fig 6 based on backpressure change amount $\Delta P$ determined by the above equation (1), a backpressure correction coefficient $\beta$ to multiply basic addition interval Tb is calculated The calculation of backpressure correction coefficient $\beta$ is performed in step ST4 in a flowchart of Fig 3 The backpressure correction coefficient map is prepared by mapping the relation between backpressure correction coefficient $\beta$ and both backpressure change amount $\Delta P$ and a feed pressure (an engine revolution number Ne) determined beforehand through experiments and calculations, and the map is stored beforehand in ROM 102 of ECU 100 Backpressure correction coefficient $\beta$ is set to be decreased with an increase in backpressure change amount $\Delta P$ Accordingly, with a decrease in backpressure correction coefficient $\beta$, a fuel addition interval is reduced, and the fuel addition amount is corrected to be increased

Instead of determining the backpressure correction coefficient from the map as described above, the backpressure correction coefficient may also be calculated, for example, by utilizing that a difference between an injection pressure PA and backpressure change amount $\Delta P$ corresponds to a shortage in the fuel addition amount, and using $\sqrt{}$ (PA-$\Delta P$) as a correction amount to determine a backpressure correction coefficient correcting basic addition interval Tb Further, backpressure change amount $\Delta P$ may be determined by detecting basic backpressure P 1 and present backpressure P2 with a pressure sensor provided adjacent to fuel addition valve 25

[Description of Addition Interval Correction Process]

The addition interval correction process will now be described

As described above, when the pressure in the exhaust path provided with fuel addition valve 25 is increased due to an increase in the exhaust gas flow volume or an increase in the exhaust gas temperature, and thus the backpressure at the ejection hole portion of fuel addition valve 25 is increased, the actual fuel addition amount is decreased In such a situation, it is not possible to ensure an increase in the catalyst bed temperature required for the exhaust gas purifying function of the catalyst, due to a shortage in the fuel addition amount Further, a temperature at a tip portion of fuel addition valve 25 is increased, causing clogging of the ejection hole of fuel addition valve 25 with deposits produced by the increase in the temperature To solve such problems, the present embodiment has a characteristic that the fuel addition interval is corrected according to backpressure change amount $\Delta P$ at the ejection hole portion of fuel addition valve 25 to secure a fuel addition amount required for such as the exhaust gas purifying function of the catalyst

A specific example of the addition interval correction process will be described with reference to the flowchart of Fig 3 The addition interval correction process is performed by ECU 100 This addition interval correction routine is repeatedly performed in a predetermined cycle

Firstly, in step ST1, engine revolution number Ne is read from the output of crank position sensor 40, and a required addition amount Q is calculated with reference to a map based on engine revolution number Ne The map for calculating required addition amount Q is prepared by mapping the relation between engine revolution number Ne and required addition amount Q determined beforehand through experiments and calculations, and the map is stored beforehand in ROM 102 of ECU 100

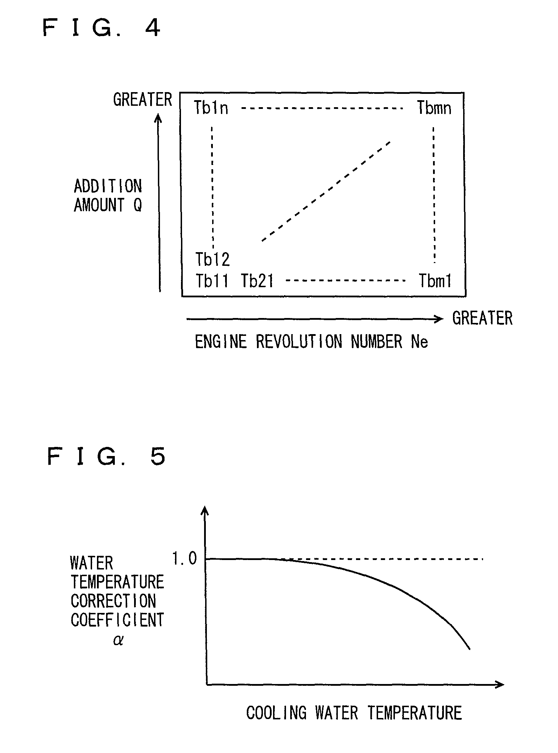

In step ST2, basic addition interval Tb (see Fig 7) of the fuel is calculated with reference to a map of Fig 4 based on required addition amount Q and engine revolution number Ne The basic addition interval calculation map is prepared by mapping the relation between basic addition interval Tb and both required addition amount Q and engine revolution number Ne determined beforehand through experiments and calculations, and the map is stored beforehand in ROM 102 of ECU 100 Further, in step ST2, backpressure (basic backpressure) P1, exhaust gas flow volume (basic exhaust gas flow volume) Vl, and exhaust gas temperature (basic exhaust gas temperature) T1 when basic addition interval Tb is calculated are obtained

Herein, the backpressure is obtained with reference to a map based on conditions such as the exhaust gas flow volume (intake air volume), the exhaust gas temperature, and the atmospheric pressure The exhaust gas flow volume is obtained from the intake air volume read from an output of air flow meter 32 The exhaust gas temperature (ambient temperature of fuel addition valve 25) is calculated (estimated) with reference to an exhaust gas temperature calculation map having parameters such as engine revolution number Ne, the intake air temperature, and the atmospheric pressure prepared through experiments and calculations and stored beforehand in ROM 102 of ECU 100. The exhaust gas temperature may also be obtained, for example, from an output of a sensor provided upstream of turbo charger 5 for detecting an exhaust gas temperature upstream of turbo charger 5.

In step ST3, a cooling water temperature is read from an output of water temperature sensor 31, and a water temperature correction coefficient $\alpha$ is calculated with reference to a map of Fig. 5 based on the cooling water temperature. The water temperature correction coefficient map is prepared by mapping the relation between the cooling water temperature and water temperature correction coefficient $\alpha$ determined beforehand through experiments and calculations, and the map is stored beforehand in ROM 102 of ECU 100.

In step ST4, backpressure change amount $\Delta P$ is calculated based on the above equation (1), using basic backpressure P1, basic exhaust gas flow volume V1, and basic exhaust gas temperature T1 calculated in step ST2, and exhaust gas flow volume V2 and exhaust gas temperature T2 at present. Next, backpressure correction coefficient $\beta$ is calculated with reference to the map of Fig. 6 based on calculated backpressure change amount $\Delta P$.

Subsequently, in step ST6, a final addition interval is calculated based on an arithmetic expression [final addition interval = basic addition interval Tb $\times$ water temperature correction coefficient $\alpha$ $\times$ backpressure correction coefficient $\beta$], using basic addition interval Tb, water temperature correction coefficient $\alpha$, and backpressure correction coefficient $\beta$ calculated as described above, and the routine is terminated.

According to the addition interval correction process described above, the fuel addition interval is corrected, based on the amount of change $\Delta P$ between the present backpressure and the basic backpressure when the basic addition interval is set, to be reduced with an increase in backpressure change amount $\Delta P$. Thereby, the required fuel addition amount can be secured even if the pressure in the exhaust path provided with fuel addition valve 25 is increased and thus the backpressure at the ejection hole portion of fuel addition valve 25 is increased Consequently, an increase in the catalyst bed temperature required for the exhaust gas purifying function of the catalyst can be ensured Further, the temperature at the tip of fuel addition valve 25 can be maintained at not more than a predetermined value (i e , a temperature at which production of the deposits can be suppressed), and thus clogging of the ejection hole of fuel addition valve 25 with the deposits can be avoided

In the addition interval correction process described above, correction taking a change in the feed pressure into account may be added when backpressure correction coefficient $\beta$ is calculated The addition of such feed pressure correction can suppress an effect caused when the feed pressure is instantaneously reduced due to in-cylinder injection in engine 1 (i e , a reduction in the fuel addition amount), and allows the fuel to be added with higher accuracy

<Other Embodiments>

In the above example, the fuel addition amount is corrected by multiplying basic addition interval Tb by backpressure correction coefficient $\beta$ Alternatively, the fuel addition amount may be corrected to be increased by multiplying a basic addition time period for each addition (see Fig 7) by a backpressure correction coefficient It is to be noted that, when the basic addition time period is corrected, the backpressure correction coefficient is set to be increased with an increase in backpressure change amount $\Delta P$

While the above example describes a case where the exhaust gas purification device of the present invention is applied to an in-cylinder direct injection four-cylinder diesel engine, the present invention is not limited thereto, and is applicable for example to a diesel engine with any other number of cylinders such as an in-cylinder direct injection six-cylinder diesel engine Further, in addition to an in-cylinder direct injection diesel engine, the present invention is also applicable to a diesel engine of any other type Furthermore, the present invention is applicable not only to an engine for a vehicle but also to an engine used for any other application

While the above example describes a case where catalyst device 4 includes NOx occlusion-reduction catalyst 4a and DPNR catalyst 4b, catalyst device 4 may include NOx occlusion-reduction catalyst 4a or an oxidation catalyst, and a DPF

It should be understood that the embodiments herein disclosed are by way of illustration in all respects and not to be taken by way of limitation The scope of the present invention is defined not by the above description but by the appended claims, and is intended to include all the modifications within the meaning and the scope equivalent to those of the claims

**Claims**

1. An exhaust gas purification device having a catalyst provided in an exhaust path of an internal combustion engine and a fuel addition valve adding fuel to said exhaust path, comprising
   detection means for detecting a pressure in the exhaust path provided with said fuel addition valve, and
   correction means for correcting an addition amount of the fuel to be added to said exhaust path based on said detected pressure

2. The exhaust gas purification device according to claim 1, wherein said correction means includes means for correcting the addition amount of the fuel to be added to said exhaust path based on said detected pressure, taking into account a timing when the fuel is injected into a cylinder of said internal combustion engine

3. The exhaust gas purification device according to claim 1, wherein said detection means includes means for calculating the pressure in said exhaust path based on at least one of an exhaust gas flow volume and an exhaust gas temperature

4. The exhaust gas purification device according to claim 3, wherein said correction means includes means for correcting the addition amount of the fuel to be added to said exhaust path based on said detected pressure, taking into account a timing when the fuel is injected into a cylinder of said internal combustion engine

5. The exhaust gas purification device according to any of claims 1 to 4, wherein said correction means includes means for correcting an injection amount of the fuel to be injected to said exhaust path by multiplying at least one of a basic injection time interval and a basic injection time period by a correction coefficient according to the pressure in said exhaust path

6. An exhaust gas purification device having a catalyst provided in an exhaust path of an internal combustion engine and a fuel addition valve adding fuel to said exhaust path, comprising
   a detection unit detecting a pressure in the exhaust path provided with said fuel addition valve, and
   a control unit controlling said exhaust gas purification device,
   wherein said control unit corrects an addition amount of the fuel to be added to said exhaust path based on said detected pressure

7. The exhaust gas purification device according to claim 6, wherein said control unit corrects the addition amount of the fuel to be added to said exhaust path based on said detected pressure, taking into account a timing when the fuel is injected into a cylinder of said internal combustion engine

8. The exhaust gas purification device according to claim 6, wherein said detection unit calculates the pressure in said exhaust path based on at least one of an exhaust gas flow volume and an exhaust gas temperature

9. The exhaust gas purification device according to claim 8, wherein said control unit corrects the addition amount of the fuel to be added to said exhaust path based on said detected pressure, taking into account a timing when the fuel is injected into a cylinder of said internal combustion engine

10. The exhaust gas purification device according to any of claims 6 to 9, wherein said control unit corrects an injection amount of the fuel to be injected to said exhaust path by multiplying at least one of a basic injection time interval and a basic injection time period by a correction coefficient according to the pressure in said exhaust path

# F I G.  1

# F I G. 2

| | | | |
|---|---|---|---|
| 31 | WATER TEMPERATURE SENSOR | | |
| 32 | AIR FLOW METER | | |
| 33 | INTAKE AIR TEMPERATURE SENSOR | | |
| 34 | INTAKE AIR PRESSURE SENSOR | | |
| 35 | A/F SENSOR | | |
| 36 | EXHAUST GAS TEMPERATURE SENSOR | | |
| 37 | RAIL PRESSURE SENSOR | | |
| 38 | FUEL PRESSURE SENSOR | | |
| 39 | ACCELELATOR OPENING DEGREE SENSOR | | |
| 40 | CRANK POSITION SENSOR | | |

100:ECU

105

EXTERNAL INPUT CIRCUIT

BACK-UP RAM — 104

RAM — 103

ROM — 102

CPU — 101

107

| | |
|---|---|
| 23 | INJECTOR |
| 24 | CUT-OFF VALVE |
| 25 | FUEL ADDITION VALVE |
| 5d | VARIABLE NOZZLE VANE MECHANISM |
| 62 | THROTTLE VALVE |
| 81 | EGR VALVE |

EXTERNAL OUTPUT CIRCUIT

106

# F I G. 3

```
                    START

                                                    ST1
        CALCULATE REQUIRED
        ADDITION AMOUNT
                                                    ST2
        CALCULATE BASIC ADDITION
        TIME INTERVAL
                                                    ST3
        CALCULATE WATER TEMPERATURE
        CORRECTION COEFFICIENT
                                                    ST4
        CALCULATE BACKPRESSURE
        CORRECTION COEFFICIENT
                                                    ST5
        CALCULATE FINAL ADDITION
        TIME INTERVAL

                    RETURN
```

# F I G. 4

GREATER

ADDITION
AMOUNT Q

Tb1n - - - - - - - - - - - - - - - - Tbmn

Tb12
Tb11   Tb21 - - - - - - - - - - - - - Tbm1

GREATER

ENGINE REVOLUTION NUMBER Ne

# F I G. 5

WATER
TEMPERATURE
CORRECTION
COEFFICIENT
$\alpha$

1.0

COOLING WATER TEMPERATURE

12

F I G. 6

ΔP=0

ΔP

ΔP

ΔP

ΔP

ΔP

GREATER

BACKPRESSURE
CORRECTION
COEFFICIENT
β

FEED PRESSURE

F I G. 7

ADDITION INTERVAL

ADDITION TIME PERIOD
(FOR EACH ADDITION)

TIME

<table>
<tr><td colspan="2" align="center">**INTERNATIONAL SEARCH REPORT**</td><td>International application No.<br>PCT/JP2006/317388</td></tr>
</table>

| A. CLASSIFICATION OF SUBJECT MATTER |
|---|
| *F01N3/36*(2006.01)i, *B01D53/94*(2006.01)i, *F01N3/02*(2006.01)i, *F01N3/08* (2006.01)i, *F01N3/20*(2006.01)i, *F02D45/00*(2006.01)i |

According to International Patent Classification (IPC) or to both national classification and IPC

| B. FIELDS SEARCHED |
|---|
| Minimum documentation searched (classification system followed by classification symbols) |
| F01N3/36, B01D53/94, F01N3/02, F01N3/08, F01N3/20, F02D45/00 |

Documentation searched other than minimum documentation to the extent that such documents are included in the fields searched
| | | |
|---|---|---|
| Jitsuyo Shinan Koho | 1922-1996 | Jitsuyo Shinan Toroku Koho 1996-2006 |
| Kokai Jitsuyo Shinan Koho | 1971-2006 | Toroku Jitsuyo Shinan Koho 1994-2006 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| X<br>Y | JP 2003-201836 A (Nippon Soken, Inc.),<br>18 July, 2003 (18.07.03),<br>Par. Nos. [0052], [0059]<br>(Family: none) | 1,3,5,6,8,10<br>2,4,7,9 |
| X<br>Y | JP 2002-155732 A (Toyota Motor Corp.),<br>31 May, 2002 (31.05.02),<br>Par. Nos. [0048] to [0052], [0063]<br>& DE 10156714 A | 1,3,5,6,8,10<br>2,4,7,9 |
| Y | JP 2003-262171 A (Toyota Motor Corp.),<br>19 September, 2003 (19.09.03),<br>Par. No. [0055]<br>(Family: none) | 2,4,7,9 |

☒ Further documents are listed in the continuation of Box C.   ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>13 November, 2006 (13.11.06) | Date of mailing of the international search report<br>21 November, 2006 (21.11.06) |
|---|---|
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

| International application No. |
| --- |
| PCT/JP2006/317388 |

C (Continuation).    DOCUMENTS CONSIDERED TO BE RELEVANT

| Category* | Citation of document, with indication, where appropriate, of the relevant passages | Relevant to claim No. |
| --- | --- | --- |
| Y | JP 2002-39006 A  (Toyota Motor Corp.),<br>06 February, 2002 (06.02.02),<br>Par. Nos. [0075], [0076]<br>(Family: none) | 2,4,7,9 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8270435 A